# EUROPÄISCHE PATENTSCHRIFT

(11) **EP 0 408 843 B1**
(45) Veröffentlichungstag und Bekanntmachung des Hinweises auf die Patenterteilung: **24.08.1994**
(21) Anmeldenummer: 90107644.8
(22) Anmeldetag: 23.04.1990
(51) Int. Cl.: H04Q 3/62

(54) **Rechnergesteuerte Telekommunikationsanlage**
Computer controlled telecommunications exchange
Central de télécommunications commandé par ordinateur

(30) Priorität: 17.07.1989 DE 3923960
(43) Veröffentlichungstag der Anmeldung: 23.01.1991
(73) Patentinhaber: DeTeWe - Deutsche Telephonwerke Aktiengesellschaft & Co., 10997 Berlin (DE)
(72) Erfinder: Weber, Rüdiger, Dr., D-1000 Berlin 20 (DE)

(56) Entgegenhaltungen:
- DE-A- 3 131 360
- US-A- 4 211 895
- US-A- 4 551 832
- TN NACHRICHTEN. vol. 79, 1978, FRANKFURT DE Seiten 8 - 14; L. Cezanne et al:"TN-System 4030 Raummultiplex - eine vollelektronische Fernsprech-Nebenstellenanlage der mittleren Baustufe"
- Proceedings, International Switching Symposium, 7-11 Mai 1984, Teil 1, Sitzung23A, Vorschlag 5, Seiten 1-5, Florenz (IT) K-E, Huhn et al: "SystemArchitecture for a Future Oriented Complete Digital PABX"

## Beschreibung

Die Erfindung betrifft eine rechnergesteuerte Telekommukationsanlage für den Anschluß von systemeigenen Endgeräten mit getrennten Leitungen für die Kommunikation und für die Zeichengabe und für über Schnittstellenanpassungen angeschlossene, nicht systemeigene Endgeräte mit gemeinsamen Leitungen für die Kommunikation und die Zeichengabe, und mit einem elektronischen Koppelnetz.

Rechnergesteuerte Telekommunikationsanlagen verwenden als Steuerungseinheit einen zentralen Rechner (DE-A- 31 31 360). In den Proceedings, International Switching Symposium, 7-11 Mai 1984, Teil 1, Sitzung 23A, Vorschlag 5, Seiten 1-5, Florenz (IT) beschreibt ferner die Druckschrift "System Architecture for a Future Oriented Complete Digital PABX", K-E. Huhn et al., eine Nebenstellenanlage mit einem zentralen Steuerrechner, dem zwei Hierarchiestufen von Mikroprozessoren untergeordnet sind. Da für sämtliche angeschlossenen Endgeräte eine gemeinsame Steuerrechnereinheit vorhanden ist, dient diese zur Verarbeitung der vermittlungstechnischen Daten, der Steuerung des Verbindungsaufbaues und der Signalisierung. Darüber hinaus werden die zentralen Steuerrechner zu Zwecken der Komfortanhebung genutzt, um spezielle Leistungsmerkmale den Benutzern bieten zu können.

Ein solcher Katalog von Leistungsmerkmalen umfaßt beispielsweise die Nutzung verschiedener Wahlverfahren bei Verwendung unterschiedlicher Endgeräte, Amtsberechtigungen, Anrufsignalisierung, Anrufzuordnung, Nachtschaltung, Ruhe vor dem Telefon, Wecken, Makeln, Gebührenerfassung, Wahlwiederholung, Wahl bei aufgelegtem Handapparat, Durchsagen, Lauthören sowie die Steuerung von zusätzlichen Einrichtungen, wie Türfreisprechen, Türöffnen, Fernwirkfunktionen und akustische Raumüberwachungseinrichtungen. Um einen solchen Katalog an Leistungsmerkmalen zusätzlich zu den normalen Telefondiensten und ggf. den Diensten des Fernkopierens, dem Bildschirmtext und der Datenübermittlung verarbeiten zu können und damit eine Leistungsgüte anbieten zu können, ist eine große Rechnerleistung erforderlich, die einen entsprechend aufwendigen und damit teueren Rechner erfordert.

Der Erfindung lag die Aufgabe zugrunde, eine rechnergesteuerte Telekommunikationsanlage zu schaffen, die die aufgeführten Leistungs- und Dienstmerkmale bietet bei wirtschaftlich geringem Rechneraufwand und damit geringeren Herstellungskosten, und die zudem mittels Anpassungen erweiterbar ist ohne Änderung der zentralen Steuereinrichtung.

Diese Aufgabe ist durch die Erfindung gelöst, wie sie im kennzeichnenden Teil des ersten Patentanspruches dargestellt ist. Die Unteransprüche beschreiben weitere vorteilhafte Maßnahmen zur Lösung der Aufgabe, eine wirtschaftliche Kommunikationsanlage hoher Güte zu schaffen.

Aufgrund eines verteilten Rechnerkonzeptes für die Steuerung durch Aufteilen eines Zentralrechners auf mehrere verteilt angeordnete Kleinrechner in der Zentralsteuerung, in den angeschlossenen Systemtelefonen und in den Schnittstellenanpassungen ist gegenüber einem gemeinsamen zentralen Rechner ein erheblicher wirtschaftlicher Vorteil gegeben. Der wirtschaftliche Aufwand für z. B. acht Kleinrechner ist wesentlich geringer gegenüber dem Aufwand eines gemeinsamen zentralen Rechners und bietet zudem eine opitmalere Nutzung der Rechnereigenschaften.

Die Erfindung wird nachfolgend anhand des Beispiels einer Kommunikationsanlage für zwei Amtsleitungen und sechs Endgeräten beschrieben. Es ist jedoch durch Vervielfältigung der Zeichengabesteuerung der Zentraleinheit und der Koppelnetzstruktur eine Erweiterung der Kommunikationsanlage ohne weiteres möglich, da die zeitkritischen Abwicklungen der Steuervorgänge an der Peripherie der Anlage, also in den Leitungsanpassungen und/oder den Endgeräten abgewickelt werden. Da dem einen Rechner der Zentralsteuerung keine zeitkritischen Steuerungsvorgänge obliegen, ist er in der Lage, auch Erweiterungen zu verwalten.

Die Erfindung ist in fünf Figuren dargestellt. Darin zeigt die
- Fig. 1: das Blockschaltbild der Vermittlungseinheit einer Telekommunikationsanlage, die
- Fig. 2: das Blockschaltbild eines systemeigenen Endgerätes mit den Sonderfunktionen für akustische Raumüberwachung und für das Fernwirken, die
- Fig. 3: die Übersicht der Schnittstellenanpassungen für nicht systemeigene Endgeräte, die über a/b-Leitungen durch Impulswahl oder Mehrfrequenzwahl den Verbindungsaufbau steuern, die
- Fig. 4: die Zusammenschaltung der Schnittstellenanpassungen nach Fig. 3 mit der Vermittlungseinheit und die
- Fig. 5: eine Sonderdatenschnittstelle für Fernwirkfunktionen.

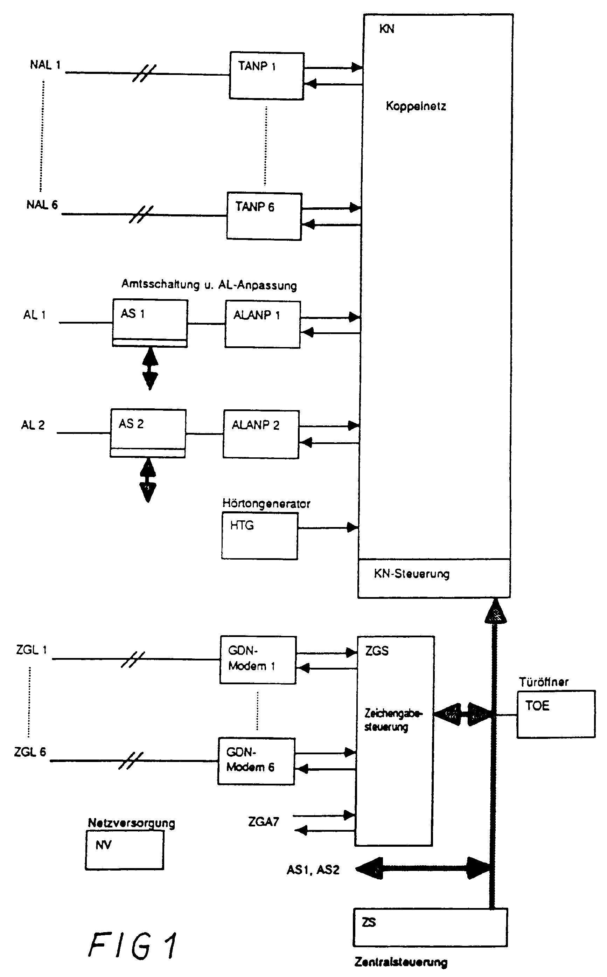

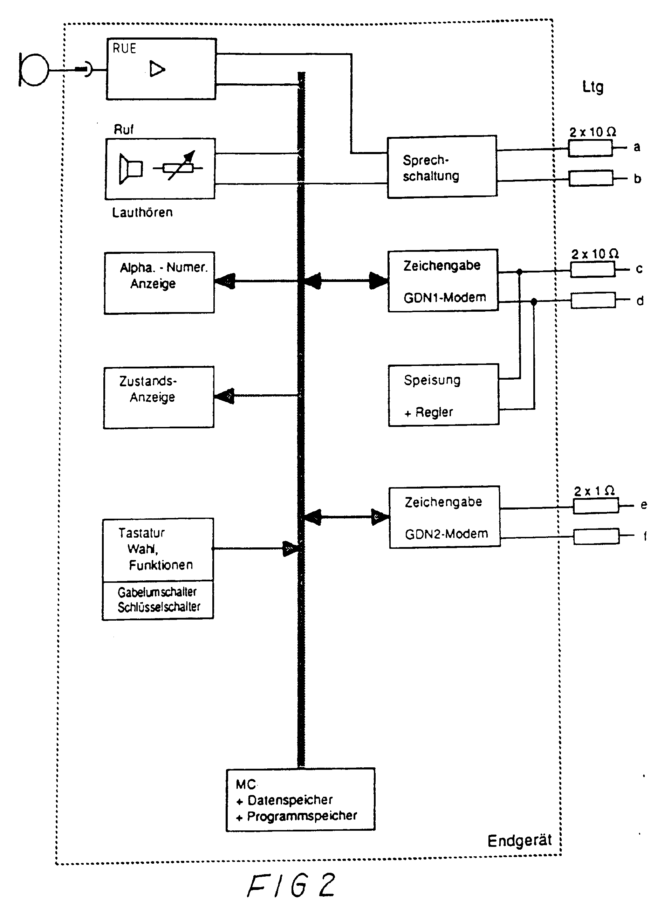

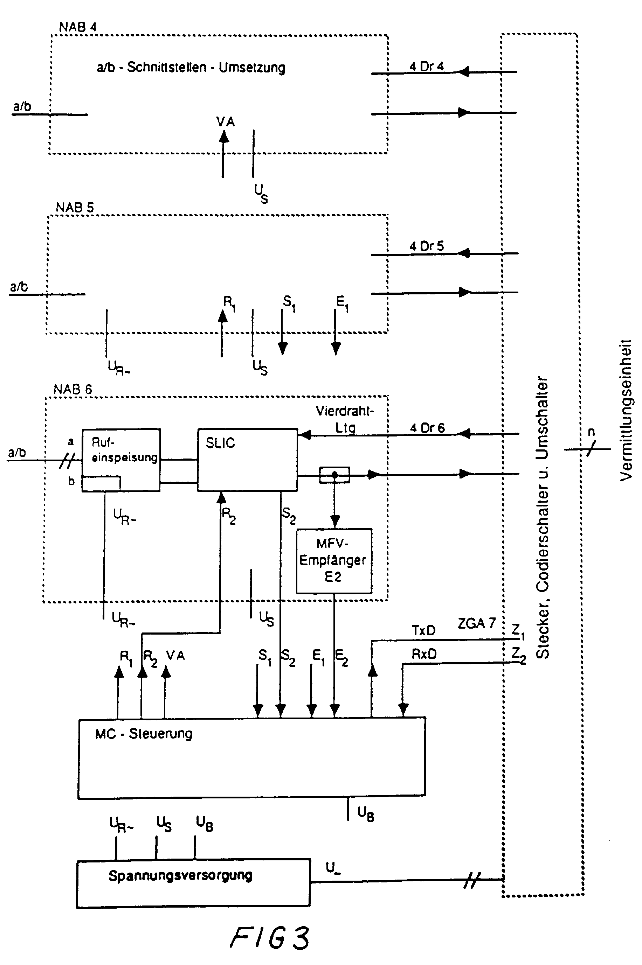

Die Telekommunikationsanlage im dargestellten Beispiel der Fig. 1 ist ein in sich geschlossenes Telefonsystem mit systemeigenen Endgeräten entsprechend der Fig. 2. Anstelle systemeigener Endgeräte sind auch herkömmliche Endgeräte über entsprechende Schnittstellenanpassungen (NAB, Fig. 3) anschließbar. Die Telekommunikationsanlage weist außer den Anschlüssen für z. B. sechs Endgeräte auch Anschlüsse für Amtsleitungen (AL) auf.

Die systemeigenen Endgeräte werden vierdrähtig mit der zentralen Vermittlungseinrichtung verbunden. Die Kommunikationsleitungen (a, b bzw. NAL) sind den Sprechkreisen vorbehalten, die zusätzlich durch Teilnehmeranpassungen (TANP) eine Zweidraht-Vierdraht-Umsetzung zum elektronischen Koppelnetz (KN) erfahren, um die kommenden und gehenden Belegungsrichtungen getrennt behandeln zu können.

Dadurch ist die Möglichkeit gegeben, gezielt einem Teilnehmer während einer bestehenden Verbindung Hörtöne zu übermitteln.

Die Zeichengabeleitungen (c, d bzw. ZGL) der systemeigenen Endgeräte sind dem Datenaustausch vorbehalten. Diese Zeichengabeleitungen (ZGL) sind über Modems (GDN) mit der Zeichengabesteuerung (ZGS) und der Zentralsteuerung (ZS) gekoppelt.

Die zentrale Vermittlungseinheit der Telekommunikationsanlage setzt sich somit aus zwei Komplexen zusammen. Den einen Komplex bildet das elektronische Vierdraht-Analog-Koppelnetz (KN) mit seiner peripheren Beschaltung, den anderen Komplex stellt die Zeichengabebehandlung dar.

Das Koppelnetz (KN) schaltet Analogssignale über eine Raumstufe durch, wobei als Durchschaltelemente elektronische Koppelpunkte auf der Basis von Crosspoint-Arrays verwendet werden. Das Verhältnis von Durchlaßwiderstand zum Sperrwiderstand der elektronischen Koppelpunkte wird durch eine hochohmige Koppelnetzbeschaltung ausgeglichen, um die geforderte Nebensprechdämpfung zu gewährleisten. Hierzu ist eine Impedanzwandlung in den Teilnehmeranpassungen (TANP) vorgesehen.

Zur peripheren Beschaltung des Koppelnetzes (KN) zählen die Teilnehmeranpassungen (TANP), die die Zweidraht-Vierdraht-Wandlung der Sprechwege, die Impedanzwandlung und die Pegelanpassung umfassen, die Amtsschaltungs- (AS) und Amtsleitungsanpassungen (ALANP) und die Hörtongeneratoren (HTG). Die Amtsschaltungen (AS) dienen als Schnittstelle zwischen der Kommunikationsanlage und der öffentlichen Vermittlungsstelle und ermöglichen den Kennzeichenaustausch. Zudem ist in den Amtsschaltungen (AS) jeweils ein Prüfindikator für die Ferndiagnose vom Prüfplatz des öffentlichen Netzes vorhanden. Die Amtsschaltungen (AS) umfassen außerdem eine 16 kHz-Weiche, eine Ruferkennung, eine Schleifenüberwachung, einen Mehrfrequenz-Empfangs- und Sendebaustein, einen Impulsgeber und einen Überspannungsschutz.- Die Amtsleistungsanpassungen (ALANP) haben praktisch dieselben Funktionen wie die oben beschriebenen Teilnehmeranpassungen (TANP). Sie sind vierdrähtig mit dem Koppelnetz (KN) verbunden.

Die Zeichengabe-Behandlung wird durch einen mikrocomputergesteuerten Systembus vorgenommen. Über den Bus wird zudem das Koppelnetz (KN) gesteuert und der Datenaustausch mit den Endgeräten abgewickelt.

Die Energieversorgung der gesamten Anlage einschließlich der Endgeräte wird durch eine Netzversorgung (NV) gewährleistet.

Zum Erreichen einer Vielzahl von Leistungsmerkmalen und einer hohen Güte sowie zur Kostensenkung bei der Herstellung der Telekommunikationsanlagen werden für die notwendige hohe Rechnerleistung anstelle des Einsatzes eines zentralen Rechners an zentraler Stelle mehrere einfache Rechner miteinander verknüpft. So ist in der Zentralsteuerung (ZS) ein Rechner eingesetzt, der nur bestimmte Steuerungsaufgaben durchführt und Befehle zu einem weiteren Rechner in der Zeichengabesteuerung (ZGS) und zu den Rechnern der Endgeräte weiterleitet.

Der Rechner der Zentralsteuerung (ZS) ist in einer Sprache programmiert, die eine relativ langsame Verarbeitung bewirkt. Aus diesem Grund werden die zeitkritischen Eigenschaften der Telekommunikationsanlage durch den Rechner in der Zeichengabesteuerung (ZGS) abgedeckt. Über die Zeichengabesteuerung (ZGS) werden die Nachrichten an die Endgeräte verteilt.

Die Rechner der Endgeräte haben die Aufgabe, eine Vorverarbeitung der Daten vorzunehmen. Die Daten werden blockgesichert übertragen. Wenn dabei Störungen auftreten, führt diese Blockübertragung nicht zu Fehlfunktionen in der Anlage.

Die Steuerungsvorgänge werden am Beispiel eines Verbindungsaufbaues nachfolgend verdeutlicht. Durch die Betätigung des Gabelumschalters oder einer Funktionstaste der Tastatur des Endgerätes (Fig. 2) wird dessen Rechner (MC) aktiviert. Der Rechner (MC) umfaßt außer einem Mikrocomputer einen Datenspeicher und einen Programmspeicher. Über die endgeräteseitige Gleichstrom-Datenübertragung mit niedrigem Pegel (GDN) wird eine Datenverbindung über die zugeordnete Zeichengabeleitung (c, d bzw. ZGL) und dem anlageseitigen Modem (GDN) zur Zeichengabesteuerung (ZGS) aufgebaut. Um einen hohen Durchsatz zu erzielen, arbeitet die Steuerung im sogenannten Wettbewerbsverfahren. Das heißt, es sind bidirektionale Übertragungsleitungen zwischen den anlageseitigen Modems (GDN) und der Zeichengabesteuerung (ZGS) geschaltet. Für mögliche Kollisionen, wenn also zufällig in jeder Richtung eine Übertragung erfolgt, also die Zentrale eine Nachricht zum Endgerät sendet, z. B. einen ankommenden Ruf, und gleichzeitig das Endgerät einen abgehenden Ruf beantragt, ist im Rechner der Zeichengabesteuerung (ZGS) ein Protokoll definiert, das solche Kollisionen erkennt und behebt. Eine gleichzeitige Anforderung zweier Endgeräte wird nacheinander behandelt.

Bei erfolgreicher Übertragung wird die Nachricht quittiert, so daß der Benutzer aufgrund einer Zustandsanzeige des Endgerätes erkennt, daß die vermittlungstechnische Prozedur ausgeführt wurde und es somit nicht durch Wiederholen von Tastenbetätigung zu Kollisionen kommen kann. Diese Tastenbetätigungen am Endgerät führen über die Zeichengabesteuerung (ZGS) zu Reaktionen in der Zentralsteuerung (ZS). Da die Akzeptanz einer Kommunikationsanlage dadurch gegeben ist, daß auf eine Aktion des Benutzers eine unmittelbare Reaktion der Steuerung folgt, ist eine höchstmögliche Reaktionsgeschwindigkeit anzustreben. Dies ist erreicht, indem im Programm- und Datenspeicher der Endgeräte Texte für die Bedienerführung abgelegt sind. Mittels einer von der Zentralsteuerung gesendeten Hinweisadresse wird der entsprechende Text aufgerufen und von dem Rechner (MC) des Endgerätes an die alphanumerische Anzeige gegeben. Somit ist auch eine schnelle Aktualisierung der Anzeige ermöglicht, da nur die Hinweisadressen zu senden sind und nicht die umfangreicheren Texte selbst.

Bei mit Parametern versehenen Texte werden durch die Zentralsteuerung (ZS) die Hinweisadresse und der Parameter übertragen. In diesem Fall wird der Text aus dem Speicher des Endgerätes abgerufen und mit dem gesendeten Parameter zu einer Anzeige vereinigt, z. B. "Anruf von Sprechstelle 5".

Ein weiterer Vorteil der verteilt in der Anlage vorhandenen Rechner besteht darin, daß ein oder mehrere lokale Rechner der Endgeräte Textspeicherungen in verschiedenen Sprachen oder gemischt-sprachlich enthalten können oder nach Bedarf ohne großem Aufwand änderbar sind.

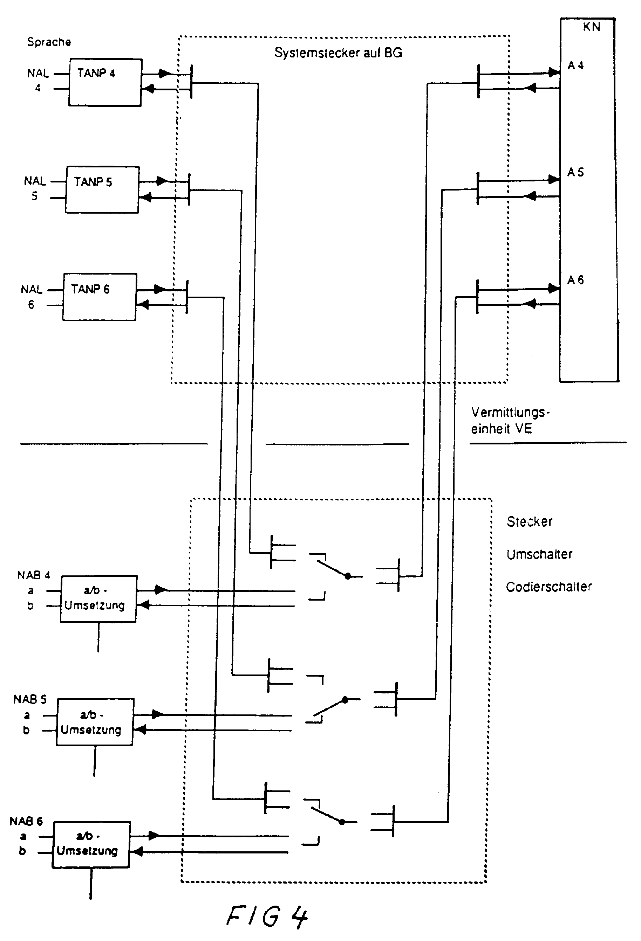

Die Telekommunikationsanlage ist für den Anschluß nicht systemeigener Endgeräte herkömmlicher Anschlußtechnik mit gemeinsamen Leitungen für die Kommunikation und die Zeichengabe, wie Standardapparate, schnurlose Telefone, Fernkopierer usw., nutzbar. Für diesen Zweck sind Schnittstellenanpassungen (NAB) vorgesehen (Fig. 3). Die Anpassungen (NAB) werden mittels Stecker, Codierschalter und Umschalter (Fig. 3, 4) nach Bedarf eingeschleift. Die Schalterstellungen (Fig. 4) werden über die Mikrocomputersteuerung (Fig. 3) der Anpassungen der Zentralsteuerung (ZS, Fig. 1) übermittelt. Die Zentralsteuerung (ZS) erkennt somit den eigenen Systemzustand. Sind derartige Anpassungen nicht vorhanden, so werden über die Stecker die Verbindungen der Anschlüsse für systemeigene Endgeräte (NAL) direkt an die Ausgänge (A) des Koppelnetzes (KN) geschaltet.

Steuerungstechnisch verfügen die Anpassungen über eine eigene Mikrocomputersteuerung (Fig. 3), die über einen eigenen Zeichengabeanschluß (ZGA 7) mit der Zeichengabesteuerung (ZGS) verbunden ist.

Die Spannungsversorgung wird von der Netzversorgung (NV, Fig. 1) abgegriffen und als Ruf- (U_{R}), Speicher- (U_{S}) und Betriebsspannung (U_{B}) den Anpassungen bzw. deren Steuerung zugeführt. Ruf- und Schleifensignalisierungen (R, S) sowie Empfängersignale (E) werden von der Mikrocomputersteuerung in Signalfolgen bzw. Protokollstrukturen zur Verarbeitung durch die Zentralsteuerung (ZS) umgesetzt. Sind mehrere derartiger Anpassungsanschlüsse programmiert, so wird durch eine Protokollerweiterung ermöglicht, daß der Zentralsteuerung (ZS) mitgeteilt wird, von welchem Endgerät die Nachricht kommt.

Die systemeigenen Endgeräte können mit weiteren Sonderfunktionen ausgestattet sein. So z. B. einer akustischen Raumüberwachung, für die ein entsprechender Verstärker im Endgerät vorgesehen ist, dessen Aktivierung und Steuerung über den lokalen Rechner (MC) vorgenommen wird.

Bei Anschluß einer Türfreisprecheinrichtung mit einem Türöffner ist der zugeordneten Anpassungsschnittstelle (NAB 4) eine Verstärkerschaltung zugeordnet, die über einen entsprechenden Anschluß (VA) von der Mikrocomputersteuerung abgefragt wird.

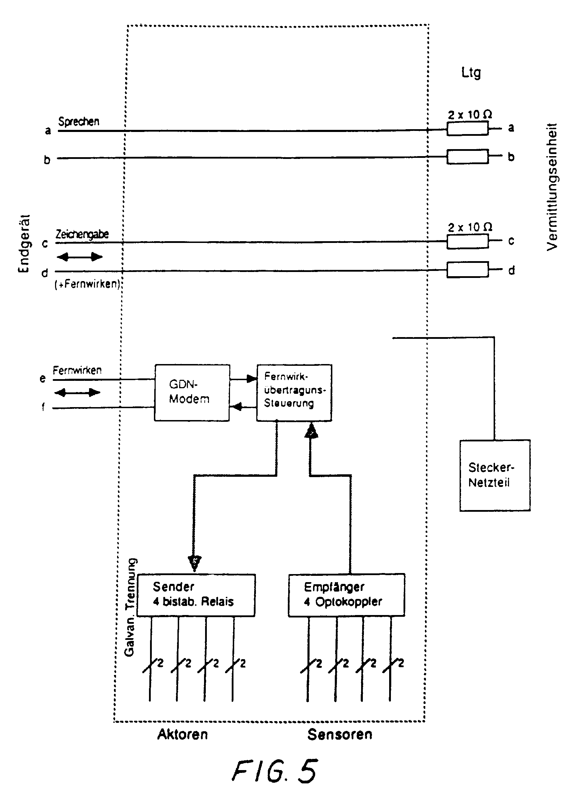

Für Sonderfunktionen ist eine weitere Datenschnittstelle vorgesehen (Fig. 5), die aus der Zentralsteuerung (ZS) ausgelagert ist. Sie bietet die Möglichkeit von Fernwirkfunktionen, deren Schreib- und Lesebefehle innerhalb der Anlage durch jedes Endgerät steuerbar sind. Die Zeichengabe des Endgerätes wird über das zweite Modem (GDN2) vermittlungstechnisch über zwei Zeichengabeleitungen (e, f) der Sonderdatenschnittstelle zugeleitet, die die Abwicklung der Steuerung mittels einer mit einem Mikrocomputer versehenen Fernwirkübertragungssteuerung durchführt, wobei Aktoren eingestellt und/oder Sensoren abgefragt werden. Damit können beispielsweise Heizungen ferngesteuert werden, wobei die Fernwirkfunktion auch von einem fernen Ende, z. B. dem Urlaubsort, steuerbar ist, durch Nachsignalisierung mittels eines MFV-Handsenders. Ebenso sind Raumüberwachungsanlagen auf diese Weise abfragbar.

Eine Erweiterung der Telekommunikationsanlage bzw. deren Vergrößerung, z. B. Verdoppelung, ist aufgrund der Tatsache, daß die zeitkritischen Vermittlungs- und Steuerfunktionen der Peripherie der Anlage zugeordnet sind, mit relativ geringem Aufwand möglich. Die Zentralsteuerung (ZS) braucht lediglich die Erweiterung zu verwalten. Die Erweiterung kann somit hardwaremäßig in einfacher Weise durch Hinzufügen weiterer Koppelnetze (KN) und Zeichengabesteuerungen (ZGS) vorgenommen werden.

## Patentansprüche

1. Rechnergesteuerte Telekommunikationsanlage für den Anschluß von systemeigenen Endgeräten mit getrennten Leitungen für die Kommunikation und für die Zeichengabe und für über Schnittstellenanpassungen angeschlossene, nicht systemeigene Endgeräte mit gemeinsamen Leitungen für die Kommunikation und die Zeichengabe, und mit einem elektronischen Koppelnetz, dadurch gekennzeichnet, daß die Steuerung auf mehrere Rechner innerhalb der Kommunikationsanlage verteilt ist, wobei ein Rechner der Zentralsteuerung (ZS), ein Rechner der Zeichengabesteuerung (ZGS), ein Rechner allen Schnittstellenanpassungen (NAB) und jedem systemeigenen Endgerät ein Rechner zugeordnet sind und daß die zeitkritischen Vermittlungs- und Steuerfunktionen von dem Rechner der Zeichengabesteuerung (ZGS) verarbeitet werden.

2. Rechnergesteuerte Telekommunikationsanlage nach Anspruch 1, dadurch gekennzeichnet, daß der gemeinsame Rechner (MC-Steuerung) der Schnittstellenanpassungen (NAB) der Signalisierungsumsetzung von Ruf- und Schleifensignalen in die Protokollstruktur der Zentralsteuerung (ZS) dient.

3. Rechnergesteuerte Telekommunikationsanlage nach Anspruch 1 und 2, dadurch gekennzeichnet, daß die Kommunikationsleitungen (a, b) der Endgeräte über Teilnehmeranpassungen (TANP) oder über die Schnittstellenanpassungen (NAB) vierdrähtig an das Koppelnetz (KN) geführt sind, wobei die Anpassungen (TANP, NAB) der Zweidraht-Vierdraht-Umsetzung der Sprechwege der Impedanzwandlung und der Pegelanpassung dienen.

4. Rechnergesteuerte Telekommunikationsanlage nach Anspruch 1 und 2, dadurch gekennzeichnet, daß die Zeichengabeleitungen (ZGL) der systemeigenen Endgeräte zur Datenübertragung mittels niedrigem Pegel endgeräte- und anlagenseitig über Modems (GDN) angeschlossen sind.

5. Rechnergesteuerte Telekommunikationsanlage nach Anspruch 1 bis 3, dadurch gekennzeichnet, daß der Rechner (MC-Steuerung) der Schnittstellenanpassungen (NAB) der nicht systemeigenen Endgeräte direkt über einen Zeichengabeanschluß (ZGA 7) mit der Zeichengabesteuerung (ZGS) verbunden ist.

6. Rechnergesteuerte Telekommunikationsanlage nach Anspruch 1 bis 3, dadurch gekennzeichnet, daß zum Anschluß von Amtsleitungen (AL) je Leitung eine Amtsschaltungs- (AS) und eine Amtsleitungsanpassung (ALANP) vorhanden sind, wobei die Amtsschaltung (AS) die Leitungsüberwachung und die Impulsumsetzung für Wähl- und Gebührenimpulse umfaßt und der Amtsleitungsanpassung (ALANP) Aufgaben der Zweidraht-Vierdraht-Umsetzung der Sprechwege, der Impedanzwandlung und der Pegelanpassung sowie der Ferndiagnose obliegen.

7. Rechnergesteuerte Telekommunikationsanlage nach Anspruch 1, 4 und 5, dadurch gekennzeichnet, daß zwischen den anlageseitigen Modems (GDN) und der Zeichengabesteuerung (ZGS) und dem Rechner (MC-Steuerung) der Schnittstellenanpassungen (NAB) und der Zeichengabesteuerung (ZGS) jeweils bidirektionale Übertragungsleitungen geschaltet sind.

8. Rechnergesteuerte Telekommunikationsanlage nach Anspruch 1 bis 6, dadurch gekennzeichnet, daß die Anlage durch Hinzufügen weiterer Zeichengabesteuerungen (ZGS) und Koppelfelder (KN) ohne hardwaremäßige Änderung der Zentralsteuerung (ZS) erweiterbar ist.

9. Rechnergesteuerte Telekommunikationsanlage nach Anspruch 1, 3 und 4, dadurch gekennzeichnet, daß die Rechner (MC) der systemeigenen Endgeräte eine Vorverarbeitung der Daten vornehmen und diese blockgesichert weiterleiten und den Rechnern (MC) Daten- und Programmspeicher zugeordnet sind.

10. Rechnergesteuerte Telekommunikationsanlage nach Anspruch 9, dadurch gekennzeichnet, daß in die Speicher der systemeigenen Endgeräte Texte zur Bedienerführung eingeschrieben sind, die durch die Zentralsteuerung (ZS) aufgerufen und durch Parameter ergänzt dem Benutzer auf der alphanumerischen Anzeige des Endgerätes sichtbar gemacht werden.

11. Rechnergesteuerte Telekommunikationsanlage nach Anspruch 9 und 10, dadurch gekennzeichnet, daß in einem oder mehreren Endgeräten einer Kommunikationsanlage in den Datenspeichern mehrsprachige Texte abgelegt sind.

12. Rechnergesteuerte Telekommunikationsanlage nach Anspruch 1, 3 und 4, dadurch gekennzeichnet, daß den systemeigenen Endgeräten Sonderfunktionen, wie Raumüberwachung, Türfreisprecheinrichtung und Fernwirkfunktionen zugeordnet sind, deren Steuerung durch den lokalen Rechner (MC) des Endgerätes vorgenommen und überwacht werden.

13. Rechnergesteuerte Telekommunikationsanlage nach Anspruch 12, dadurch gekennzeichnet, daß für die Fernwirkfunktion ein Endgerät mit einem zusätzlichen Modem (GDN2) für die Zeichengabe zur Fernwirkstation ausgestattet ist.

## Claims

1. Computer-controlled telecommunications system for the connection of system terminals with separate lines for communication and for signalling, and for non-system terminals connected via interface adapters, with common lines for communication and signalling, and with an electronic switching network, characterised in that control is distributed among several computers within the communications system, so that one computer is assigned to the central controller (ZS), one computer to the signalling controller (ZGS), one computer to all interface adapters (NAB) and one computer to each system terminal, and that the time-critical switching functions and control functions are processed by the computer of the signalling controller (ZGS).

2. Computer-controlled telecommunications system according to Claim 1, characterised in that the computer (MC controller) common to the interface adapters (NAB) is used to convert the signalling from ringing and loop signals to the protocol structure of the central controller (ZS).

3. Computer-controlled telecommunications system according to Claim 1 and 2, characterised in that the communications lines (a, b) of the terminals are four-wire circuits that are routed to the switching network (KN) via subscriber adapters (TANP) or via interface adapters (NAB), the adapters (TANP, NAB) being used for two-wire/four-wire conversion of the voice paths, impedance conversion and level matching.

4. Computer-controlled telecommunications system according to Claim 1 and 2, characterised in that the signalling lines (ZGL) of the system terminals are connected for low level data transmission via modems (GDN) at the terminal end and the system end.

5. Computer-controlled telecommunications system according to Claim 1 to 3, characterised in that the computer (MC controller) of the interface adapters (NAB) of the non-system terminals is directly connected to the signalling controller (ZGS) via a signalling connection (ZGA 7).

6. Computer-controlled telecommunications system according to Claim 1 to 3, characterised in that each line is provided with an exchange circuit adapter (AS) and an exchange line adapter (ALANP) for the connection of exchange lines (AL), wherein the exchange circuit (AS) includes line monitoring and pulse conversion for dial pulses and metering pulses and the exchange line adapter (ALANP) is responsible for the two-wire/four-wire conversion of the voice paths, impedance conversion and level matching, as well as remote diagnostics tasks.

7. Computer-controlled telecommunications system according to Claim 1, 4 and 5, characterised in that bidirectional transmission lines are connected between the system-end modems (GDN) and the signalling controller (ZGS) and the computer (MC controller) of the interface adapters (NAB) and the signalling controller (ZGS), respectively.

8. Computer-controlled telecommunications system according to Claim 1 to 6, characterised in that the system can be expanded by adding further signalling controllers (ZGS) and switching networks (KN) without modifying the hardware of the central controller (ZS).

9. Computer-controlled telecommunications system according to Claim 1, 3 and 4, characterised in that the computers (MC) of the system terminals carry out pre-processing of the data and pass these on with block protection, and data and program memories are assigned to the computers (MC).

10. Computer-controlled telecommunications system according to Claim 9, characterised in that texts for operator prompts are written into the memories of the system terminals, and said texts are called up by the central controller (ZS), extended by parameters and displayed to the user on the alphanumeric display of the terminal.

11. Computer-controlled telecommunications system according to Claim 9 and 10, characterised in that multilingual texts are stored in the data memories in one or more terminals of a communications system.

12. Computer-controlled telecommunications system according to Claim 1, 3 and 4, characterised in that special functions, such as room monitoring, entrance telephone system and telecontrol functions, whose control is effected and monitored by the local computer (MC) of the terminal, are assigned to the system terminals.

13. Computer-controlled telecommunications system according to Claim 12, characterised in that for the telecontrol function a terminal is equipped with an additional modem (GDN2) for signalling to the telecontrol station.

## Revendications

1. Installation de télécommunications commandée par ordinateur, pour le raccordement de terminaux propres au systètème, avec des lignes séparées pour la communication et pour la signalisation et pour des terminaux non propres au système, raccordés en passant par des adaptations d'interfaces, avec des lignes communes pour la communication et la signasation, et avec un réseau de commutation électronique, caractérisée par le fait que la commande est répartie sur plusieurs ordinateurs à l'intérieur de l'installation de télécommunications, un calculateur étant associé à la commande centrale (ZS), un calculateur à la commande de signalisation (ZGS), un calculateur à toutes les adaptations d'interfaces (NAB) et un calculateur à chaque terminal propre au système, et que les fonctions de commutation et de commande critiques du point de vue temps sont traitées par le calculateur de la commande de signalisation (ZGS).

2. Installation de télécommunications commandée par ordinateur suivant revendication 1, caractérisée par le fait que l'ordinateur commun (commande MC) des adaptations d'interfaces (NAB) sert à la conversion de signalisation de signaux d'appel et de boucle dans la structure de protocole de la commande centrale (ZS).

3. Installation de télécommunications commandée par ordinateur suivant revendication 1 et 2, caractérisée par le fait que les lignes de communication (a, b) des terminaux sont amenées en passant par des adaptations d'abonnés (TANP) ou en passant par des adaptations d'interfaces (NAB), à quatre fils au réseau de commutation (KN), les adaptations (TANP, NAB) de la conversion deux fils-quatre fils des voies de parole servant à la transformation d'impédance et à l'adaptation de niveau.

4. Installation de télécommunications commandée par ordinateur suivant revendication 1 et 2, caractérisée par le fait que les lignes de signalisation (ZGL) des terminaux proprés au système sont, en vue de la transmission de données avec un niveau faible, raccordées côté terminaux et côté installation en passant par des modulateurs-démodulateurs (GDN).

5. Installation de télécommunications commandée par ordinateur suivant revendication 1 à 3, caractérisée par le fait que l'ordinateur (commande MC) des adaptations d'interfaces (NAB) des terminaux non propres au système est relié directement par une connexion de signalisation (ZGA 7) à la commande de signalisation (ZGS).

6. Installation de télécommunications commandée par ordinateur suivant revendication 1 à 3, caractérisée par le fait que pour le raccordement de lignes principales (AL), un circuit principal (AS) et une adaptation de ligne principale (ALANP) sont prévus pour chaque ligne, le circuit principal (AS) comprenant la surveillance de lignes et la transformation pour les impulsions de sélection et de tarification et l'adaptation de ligne principale (ALANP) assumant les fonctions de conversion deux fils - quatre fils des voies de parole, de transformation d'impédance et d'adaptation de niveau ainsi que de diagnostic à distance.

7. Installation de télécommunications commandée par ordinateur suivant revendication 1, 4 et 5, caractérisée par le fait que des lignes de transmission bi-directionnelles sont disposées entre les modulateurs-démodulateurs (GDN) côté installation et la commande de signalisation (ZGS) et l'ordinateur (commande MC) des adaptations d'interfaces (NAB) et la commande de signalisation (ZGS).

8. Installation de télécommunications commandée par ordinateur suivant revendication 1 à 6, caractérisée par le fait que l'installation peut être étendue par addition d'autres commandes de signalisation (ZGS) et de matrices de commutation (KN) sans modification matérielle de la commande centrale (ZS).

9. Installation de télécommunications commandée par ordinateur suivant revendication 1, 3 et 4, caractérisée par le fait que les ordinateurs (MC) des terminaux propres au système procèdent à un pré-traitement des données et transmettent ces dernières par paquets et que des mémoires de données et de programmes sont associées aux ordinateurs (MC).

10. Installation de télécommunications commandée par ordinateur suivant revendication 9, caractérisée par le fait que dans les mémoires des terminaux propres au système sont inscrits des textes de guidage d'opérateur qui sont appelés par la commande centrale (ZS) et, complétés par des paramètres, sont visualisés à l'utilisateur sur l'affichage alphanumérique du terminal.

11. Installation de télécommunications commandée par ordinateur suivant revendication 9 et 10, caractérisée par le fait que des textes multilingues sont inscrits dans des mémoires de données dans un ou plusieurs terminaux d'une installation de communication.

12. Installation de télécommunications commandée par ordinateur suivant revendication 1, 3 et 4, caractérisée par le fait qu'aux terminaux propres au système sont associées des fonctions spéciales telles que surveillance de locaux, dispositifs interphones de portes et fonctions de télédéclenchement dont la commande est effectuée et surveillée par l'ordinateur local (MC) du terminal.

13. Installation de télécommunications commandée par ordinateur suivant revendication 12, caractérisée par le fait que pour la fonction de télédéclenchement, un terminal est équipé d'un modulateur-démodulateur supplémentaire (GDN2) pour la signalisation au poste de télédéclenchement.
